(19) **Europäisches Patentamt**

**European Patent Office**

**Office européen des brevets**

(11) Numéro de publication : **0 479 630 A1**

(12) # DEMANDE DE BREVET EUROPEEN

(21) Numéro de dépôt : **91402258.7**

(22) Date de dépôt : **19.08.91**

(51) Int. Cl.$^5$ : **B62D 1/16,** B62D 25/14

(30) Priorité : **26.09.90 FR 9011877**

(43) Date de publication de la demande :
**08.04.92 Bulletin 92/15**

(84) Etats contractants désignés :
**AT BE CH DE DK ES FR GB GR IT LI LU NL SE**

(71) Demandeur : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**Rue Jacques Hoffenbach**
**F-25700 Valentigney (FR)**
Inventeur : **Passebecq, Ghislain**
**Rue des Grands Bois, 21**
**F-25400 Audincourt (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Structure de support de colonne de direction pour véhicule automobile.**

(57)    Cette structure de support de direction pour véhicule automobile, est caractérisée en ce qu'elle comporte au moins une poutre (1) munie à ses extrémités d'organes (2,3) de fixation en deux points opposés du véhicule et solidaire, dans une zone intermédiaire, d'au moins un bras (5) de suspension à une baie (6) de pare-brise du véhicule et au niveau de l'intersection du bras et de la poutre, deux flasques espacés (11, 12) en regard l'un de l'autre, délimitant entre aux un espace de montage d'une colonne de direction (13).

FIG.1

**EP 0 479 630 A1**

La présente invention concerne une structure de support de direction pour véhicule automobile.

Les éléments de direction d'un véhicule automobile, tels que la colonne de direction et le volant, sont habituellement supportés à l'intérieur du poste de conduite du véhicule, par une structure qui est fixée d'une part à la baie du pare-brise et d'autre part au tablier de ce véhicule. Cette structure coopére avec des pattes de fixation portées par la colonne elle-même ou par des flasques intermédiaires, selon que la colonne est fixe ou réglable en position, pour relier cette colonne à cette structure.

Les autres éléments qui servent à piloter le véhicule, notamment la planche de bord et le pédalier, sont fixés séparément sur la carrosserie du véhicule.

Or, on constate que lors d'un choc sur l'avant du véhicule, le tablier a tendance à se déformer, de sorte que la colonne de direction remonte en direction des occupants du véhicule et notamment du conducteur, ce qui peut être la cause de blessures graves.

En conséquence, le confort d'utilisation du véhicule de même que les réglementations concernant la sécurité de ses occupants exigent que les risques de remontée de la colonne de direction en cas de choc avant, soient limités et même pratiquement supprimés.

La présente invention a pour but de répondre à cette exigence en fournissant une structure de support de direction d'un véhicule automobile qui soit particulièrement rigide et indépendante du tablier de celui-ci.

A cet effet, l'invention a pour objet une structure de support de direction pour véhicule automobile, caractérisée en ce qu'elle comporte au moins une poutre munie à ses extrémités d'organes de fixation en deux points opposés du véhicule et solidaire dans une zone intermédiaire d'au moins un bras de suspension à une baie de pare-brise du véhicule et au niveau de l'intersection du bras et de la poutre, deux flasques espacés en regard l'un de l'autre délimitant entre eux un espace de montage d'une colonne de direction et comportant à l'une de leurs extrémités un dispositif de blocage de la colonne en position.

L'invention sera mieux comprise à l'aide de la description qui va suivre, donnée uniquement à titre d'exemple et faite en se référant aux dessins annexés, sur lesquels :

– la Fig.1 représente une vue en perspective d'une structure de support selon l'invention, en position à l'intérieur d'un véhicule automobile;

– la Fig.2 représente une vue en coupe verticale, à plus grande échelle, de la structure de support selon l'invention; et

– la Fig.3 représente une vue en coupe d'un palier de support de colonne entrant dans la constitution d'une structure selon l'invention.

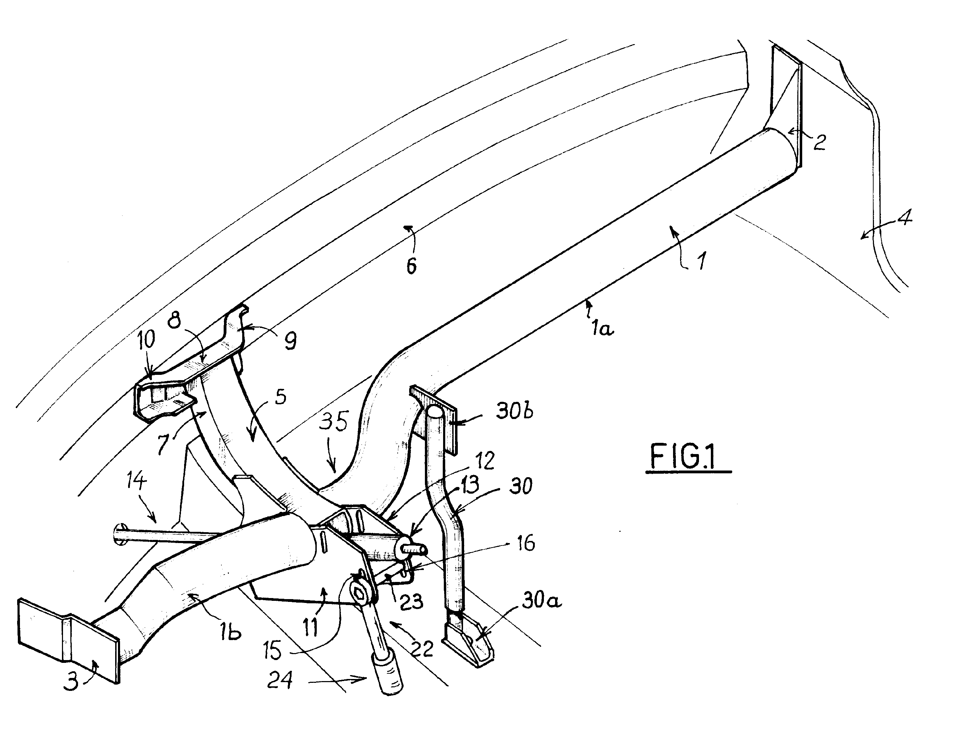

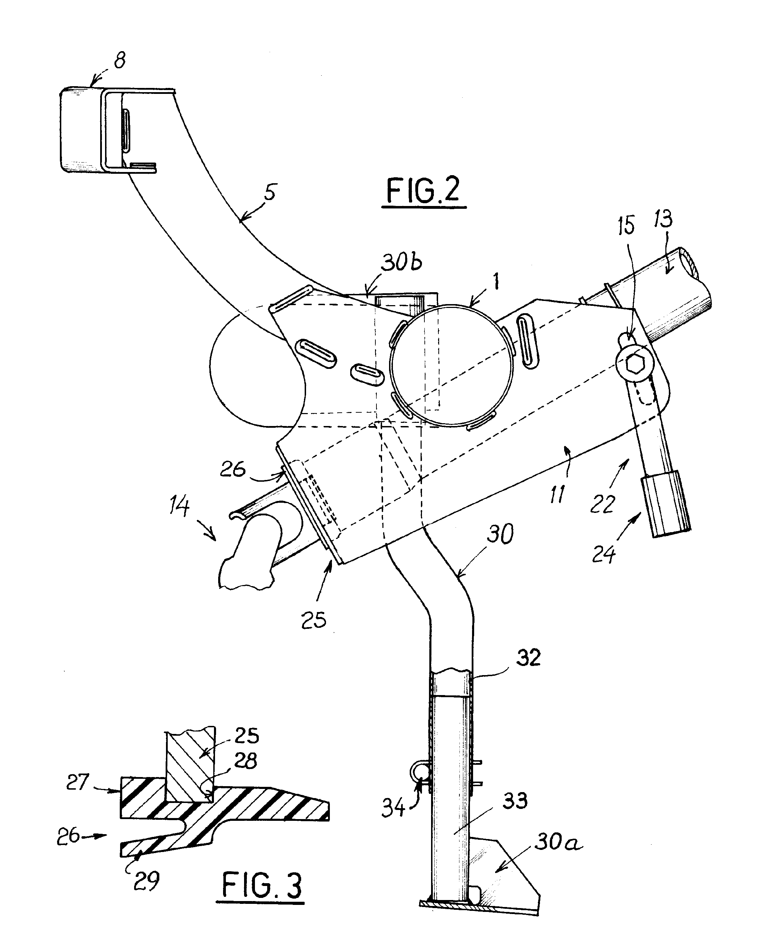

Comme on peut le voir sur les Fig.1 et 2, la structure de support objet de la présente invention, comporte au moins une poutre ou traverse 1 qui est munie à chacune de ses extrémités, de moyens respectivement 2 et 3 de fixation de cette poutre en deux points opposés sur la carrosserie du véhicule.

De préférence, cette poutre 1 présente une longueur correspondant à la largeur du véhicule, de sorte que les pattes de fixation 2 et 3 peuvent être fixées sur les montants, par exemple 4, des deux portières avant de ce véhicule.

Au niveau du poste de conduite du véhicule, c'est à dire dans la partie gauche ou droite de l'habitacle de celui-ci, suivant le cas, la poutre 1 est reliée à au moins un bras 5 dirigé vers le haut et de préférence incurvé, de liaison ou de suspension de cette poutre 1 à la baie 6 de pare-brise du véhicule.

Ce bras est par exemple constitué par un profilé de section en U renversé, présentant deux flancs latéraux parallèles dont l'un, 7, est visible sur cette Fig.1.

A l'une de ses extrémités, ce bras 5 est relié à une ferrure 8 comportant deux branches latérales divergentes, respectivement 9 et 10, de fixation de ce bras sur la baie de pare-brise du véhicule.

A son autre extrémité, le bras est relié à la poutre.

Dans le mode de réalisation représenté sur ces figures, la poutre 1 se présente sous la forme de deux tronçons 1a et 1b de longueur inégale qui sont soudés de part et d'autre du bras 5 sur les flancs latéraux de celui-ci.

Bien entendu , cette poutre peut également être d'une seule pièce entre ses deux extrémités.

Sur les flancs latéraux du bras sont également fixés deux flasques 11 et 12 qui sont donc espacés et en regard l'un de l'autre, pour délimiter entre eux un espace de montage d'une colonne de direction 13.

Cette colonne de direction porte à l'une de ses extrémités un volant de direction du véhicule (non représenté) et est relié à son autre extrémité au reste des organes de direction du véhicule, ces organes étant désignés par la référence générale 14 sur ces figures.

Il va de soi bien entendu que cette colonne de direction peut être montée fixe ou réglable en position par pivotement et/ou déplacement axial comme cela est connu en soi.

A cet effet, et comme on peut le voir sur ces Figures, les flasques comportent à leur partie supérieure, c'est à dire à leur extrémité la plus éloignée de la ferrure 8, un orifice 15, 16 de montage d'un dispositif 22 de blocage en position de cette colonne de direction. Ce dispositif de blocage peut se présenter de différentes façons connues en soi.

A titre d'exemple, dans le cas où la colonne est réglable en position, le dispositif de blocage peut comporter un tirant 23 s'étendant entre les deux flasques, ce tirant étant associé à un système à vis-écrou, à genouillère ou autre, permettant de rapprocher ces flasques pour serrer et bloquer la colonne de direction en position. Ces moyens sont reliés à une poignée 24 permettant à un utilisateur de déplacer ce dispositif de blocage entre une position active et une position escamotée permettant de régler la position de cette colonne.

On notera que le tirant peut être relié comme cela est connu à un organe de montage fixé sur la colonne de direction et s'étendant entre les flasques, ce tirant et cet organe de montage étant montés déplaçables entre les flasques pour permettre le réglage de la position de la colonne.

Les orifices 15 et 16 des flasques sont formés par des lumières incurvées de guidage des extrémités du tirant permettant le déplacement par pivotement par exemple, de la colonne pour son réglage.

Dans le cas où la colonne est une colonne fixe, le dispositif de blocage comprend par exemple un système à vis-écrou associé à un tirant s'engageant dans des orifices des flasques, pour rapprocher ceux-ci et bloquer la colonne en position.

Les flasques 11 et 12 constituent également un support inférieur pour cette colonne de direction 13.

En effet, ils sont reliés entre eux, à leur partie inférieure, c'est à dire à leur extrémité la plus proche de la ferrure 8, par une plaque d'entretoise 25 percée d'un orifice central ayant un diamètre supérieur à celui de la colonne 13 pour le passage de celle-ci.

Un palier de support 26 est disposé entre la colonne et cette plaque, au niveau de l'orifice central de celle-ci, pour assurer un guidage et un maintien de la colonne à sa partie inférieure.

Dans le cas où la colonne est réglable en position, ce palier est constitué par un palier d'articulation par exemple déformable, comportant comme on peut le voir sur la Fig.3, une embase cylindrique 27 munie d'une gorge 28 adaptée pour recevoir le bord correspondant de la plaque d'entretoise 25 délimitant l'orifice central de celle-ci et une lèvre interne élastique 29 de forme générale tronçonique adaptée pour coopérer avec la colonne de direction afin de la guider et de la maintenir en position. Ce palier peut par exemple être constitué de matière plastique.

On conçoit donc que les flasques de la structure de support objet de la présente invention, servent au montage de la colonne de direction et entrent en particulier dans la constitution des moyens de blocage de celle-ci en position.

Il est également à noter comme on peut le voir sur les Fig.1 et 2, que cette structure peut être renforcée par la présence d'un pied 30, prévu dans une partie intermédiaire de cette poutre, ce pied étant muni à sa partie inférieure d'une ferrure 30a de fixation sur une partie inférieure du véhicule et en particulier, comme cela est représenté, sur le plancher de celui-ci.

A sa partie supérieure, ce pied 30 comporte une plaque 30b de fixation sur la poutre 1.

Dans le mode de réalisation représenté, la poutre 1 présente une section circulaire et la plaque 30b comporte un évidement de forme complémentaire, adapté pour coopérer avec cette poutre.

Le pied peut avantageusement être télescopique et présenter une longueur réglable pour l'adapter à la structure du véhicule.

En effet et comme on peut le voir plus particulièrement sur la Fig.2, ce pied 30 peut comporter deux portions 32 et 33, déplaçables à coulissement l'une dans l'autre et des moyens de blocage 34 de ces portions en position l'une par rapport à l'autre, constitués par une goupille traversant ces deux portions pour les maintenir en position l'une par rapport à l'autre.

On conçoit donc que la colonne de direction 13 avec son volant et le dispositif antivol associé (non représentés) sont ainsi supportés par une structure présentant une grande rigidité, qui est fixée à la carrosserie du véhicule mais n'a aucune liaison avec le tablier de celui-ci.

En conséquence, cette structure peut facilement résister à un choc avant sans provoquer de remontée de la colonne de direction dans l'habitacle du véhicule, en direction des occupants de celui-ci.

Selon un mode de réalisation, la poutre 1 présente au niveau du bras 5, une portion coudée 35 permettant de décaler la fixation de la colonne de direction par rapport à l'axe de la poutre afin de faciliter le passage de celle-ci dans le tableau de bord du véhicule.

On dispose ainsi d'une structure de support dans laquelle la colonne de direction peut être montée d'une manière particulièrement simple et qui forme avec celle-ci un sous-ensemble facile à mettre en place à l'intérieur du véhicule tout en étant particulièrement sûr.

Il apparaît très clairement en outre que ce sous-ensemble peut également supporter la planche de bord ou d'autres accessoires du poste de direction, par exemple par l'intermédiaire de pattes de fixation montées sur la poutre 1.

Enfin, bien que dans le mode de réalisation décrit, on ait représenté une poutre unique et un bras unique, la structure selon l'invention peut comporter deux poutres, par exemple parallèles, et le bras peut également être constitué de deux portions distinctes parallèles.

**Revendications**

1. Structure de support de direction pour véhicule automobile, caractérisée en ce qu'elle comporte au moins une poutre (1) munie à ses extrémités d'organes (2,3) de fixation en deux points opposés du véhicule et solidaire dans une zone intermédiaire d'au moins un bras (5) de suspension à une baie (6) de pare-brise du véhicule et au niveau de l'intersection du bras et de la poutre, deux flasques espacés (11, 12) en regard l'un de l'autre délimitant entre eux un espace de montage d'une colonne de direction (13) et comportant à l'une de leurs extrémités un dispositif de blocage (22) de la colonne en position.

2. Structure selon la revendication 1, caractérisée en ce que les flasques (11,12) comportent à l'autre de leurs extrémités un palier (26) de support de la colonne.

3. Structure selon la revendication 2, caractérisée en ce que ledit palier (26) est déformable pour permettre un déplacement de la colonne de direction.

4. Structure selon la revendication 3, caractérisée en ce que ledit palier (26) comporte une lèvre interne (30) tronconique et élastique, reliée à une embase (27) de liaison de cette lèvre aux flasques.

5. Structure selon la revendication 4, caractérisée en ce que l'embase (27) du palier est reliée à une plaque d'entretoise (25) s'étendant entre les flasques.

6. Structure selon l'une quelconque des revendications précédentes, caractérisée en ce que le dispositif de blocage comprend un tirant (23) s'étendant entre les deux flasques (11,12) et traversant des orifices (15,16) de ceux-ci, associé à des moyens de rapprochement des flasques pour serrer et bloquer la colonne en position.

7. Structure selon l'une quelconque des revendications précédentes, caractérisée en ce qu'elle comporte un pied (30) de support de la poutre (1) s'étendant en direction de la partie inférieure du véhicule.

8. Structure selon la revendication 7, caractérisée en ce que l'une des extrémités du pied est reliée à la poutre (1) et l'autre, au plancher du véhicule.

9. Structure selon la revendication 7 ou 8, caractérisée en ce que le pied présente une longueur réglable.

10. Structure selon l'une quelconque des revendications précédentes, caractérisée en ce que la poutre (1) est d'une seule pièce entre ses deux extrémités.

11. Structure selon l'une quelconque des revendications 1 à 9, caractérisée en ce que la poutre (1) est formée de deux tronçons (1a, 1b) soudés de part et d'autre du bras (5).

12. Structure selon l'une quelconque des revendications précédentes, caractérisée en ce que la poutre (1) comporte des moyens de fixation des accessoires du poste de conduite du véhicule.

FIG.1

FIG.2

FIG.3

Office européen
des brevets

**RAPPORT DE RECHERCHE EUROPEENNE**

Numero de la demande

EP    91 40 2258

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 141 959 (FIAT AUTO)<br><br>* page 5, dernier alinéa – page 6, alinéa 1 *<br>* page 8, dernier alinéa – page 9, alinéa 1; figures 3-5 * | 1,6,10, 12 | B62D1/16<br>B62D25/14 |
| Y | | 2-5,7,8 | |
| Y | GB-A-2 032 863 (CAM GEARS)<br>* page 2, ligne 3750; figure 4 * | 2-5 | |
| Y | US-A-4 362 319 (TOYOTA)<br>* abrégé; figure 1 * | 7,8 | |
| A | DE-U-8 810 952 (OPEL)<br>* page 4, ligne 7 – page 5, alinéa 1; figure 1 * | 3-6 | |

**DOMAINES TECHNIQUES RECHERCHES (Int. Cl.5)**

B62D
B60R

Le présent rapport a été établi pour toutes les revendications

| Lieu de la recherche | Date d'achèvement de la recherche | Examinateur |
|---|---|---|
| LA HAYE | 10 DECEMBRE 1991 | HAGEMAN M. |